**Europäisches Patentamt**

**European Patent Office**

**Office européen des brevets**

(19)

(11) Veröffentlichungsnummer : **0 184 612 B2**

(12)

# NEUE EUROPÄISCHE PATENTSCHRIFT

(45) Veröffentlichungstag der neuen Patentschrift :
04.03.92 Patentblatt 92/10

(51) Int. Cl.⁵ : **F28F 1/30**

(21) Anmeldenummer : **85110305.1**

(22) Anmeldetag : **17.08.85**

(54) **Wärmeübertrager, insbesonder für gas- oder ölbeheizte Wassererhitzer.**

(30) Priorität : **18.09.84 DE 3434194**
**20.06.85 DE 3522036**

(43) Veröffentlichungstag der Anmeldung :
**18.06.86 Patentblatt 86/25**

(45) Bekanntmachung des Hinweises auf die
Patenterteilung :
**07.01.88 Patentblatt 88/01**

(45) Bekanntmachung des Hinweises auf die
Entscheidung über den Einspruch :
**04.03.92 Patentblatt 92/10**

(84) Benannte Vertragsstaaten :
**AT DE FR GB IT**

(56) Entgegenhaltungen :
**DE-A- 2 104 119**
**DE-A- 2 809 477**
**GB-A- 475 526**
**GB-A- 475 540**

(73) Patentinhaber : **ROBERT BOSCH GMBH**
**Postfach 30 02 20**
**W-7000 Stuttgart 30 (DE)**

(72) Erfinder : **Schmid, Josef, Ing. grad.**
**Max-Eyth-Strasse 43**
**W-7317 Wendlingen (DE)**
Erfinder : **Kehl, Albin, Dr. Dipl.-Phys.**
**Im Viehtrieb 16**
**W-7253 Renningen 2 (DE)**
Erfinder : **Schmuker, Franz, Dipl.-Ing.**
**Frühlingstrasse 29**
**W-7321 Wangen (DE)**
Erfinder : **Leukert, Gerhard, Dipl.-Ing. (FH)**
**Panoramastrasse 90**
**W-7310 Plochingen (DE)**
Erfinder : **Kohl, Walter**
**Schwalbenweg 40**
**W-7064 Remshalden (DE)**
Erfinder : **Sauer, Christian, Dipl.-Ing.**
**Stauffenbergstrasse 3**
**W-7120 Bietigheim (DE)**

EP 0 184 612 B2

## Beschreibung

### Stand der Technik

Die Erfindung bezieht sich auf einen Wärmeübertrager, insbesondere für gas- oder ölbebeizte Wassererhitzer, nach der Gattung des Hauptanspruchs. Bei einem bekannten Wärmeübertrager dieser Gattung (DE-A1-28 09 477) sind die wasserführenden Rohre an den Befestigungsstellen der Lamellen mit einer festen und gleichmäßig über den Umfang verteilten Lotschicht aus Kupfer-Bronze versehen, über welche die aus Edelstahl bestehenden lamellen mit den aus Kupfer bestehenden Rohren verbunden sind. Diese Ausführung ist ungeeignet für Sekundär-Wärmeübertrager von sogenannten Brennwertgeräten, in denen die Abgase bis unter den Taupunkt abgekühlt werden und Kondensat in größeren Mengen ausfällt. Die als Lötschicht dienende Kupfer-Bronzeschicht ist gegen die im Kondensat enthaltenen Säurebildner $NO_X$, $SO_2$ und $CO_2$ nicht beständig, so daß die wasserführenden Rohre an den von den Lamellen nicht bedeckten Oberflächenabschnitten nach verhältnismäßig kurzer Zeit stark korrodieren.

Bei einem weiteren Wärmeübertrager (DE-OS 21 04 119) besitzen die aus CR-Stahl bestehenden Lamellen Durchgangsbunde, welche an die wasserführenden Rohre angelötet werden und diese umschließen. Zwischen benachbarten Durchgangsbunden bilden sich durch Herstellungstoleranzen bedingte Spalten, in denen sich Kondensat und damit Säurebildner sammeln können.

Ferner ist es bekannt, den Festsitz der Lamellen auf den wasserführenden Rohren dadurch herzustellen, daß die Rohre nach dem Einstecken in das vorbereitete Lamellenpaket durch einen Stempel aufgeweitet werden. Hierbei handelt es sich um Kupferrohre ohne Oberflächenüberzug, die ebenfalls nicht beständig gegen Kondensat aus den Verbrennungsgasen sind.

### Vorteile der Erfindung

Die erfindungsgemäße Anordnung mit den kennzeichnenden Merkmalen des Hauptanspruchs hat demgegenüber den Vorteil, daß der Wärmeübertrager auch in Brennvertgeräten verwendet werden kann, ohne daß die wasserführenden Rohre, die vorzugsweise aus Kupfer bestehen, durch Korrosion beschädigt oder unbrauchbar werden.

Durch die in den Unteransprüchen enthaltenen Merkmale sind vorteilhafte Weiterbildungen der Anordnung nach dem Hauptanspruch möglich.

Die Schutzschicht kann zweckmäßig durch eine Lack- oder Harzschicht, oder auch durch eine galvanisch aufgebrachte Schicht, vorzugsweise aus Sulfamat-Nickel gebildet sein. In allen diesen Fällen können die wasserführenden Rohre mit den Lamellen dadurch verbunden sein, daß die Rohre nach dem Einstecken in das vorbereitete Lamellenpaket durch einen Stempel aufgeweitet werden. Wenn dieser Arbeitsgang erst nach dem Aufbringen der Schutzschicht durchgeführt wird, ist darauf zu achten, daß die Schutzschicht die beim Aufweiten in Umfangsrichtung auftretende Dehnung unbeschadet mitmaschen kann.

Absolut dichte Schutzschichten ergeben sich, wenn diese gemäß einem weiteren Vorschlag der Erfindung durch rohrförmige Körper aus Edelstahl gebildet sind, welche die Rohre an der Mantelfläche umhüllen. Vorzugsweise können die rohrförmigen Körper durch Edelstahlfolien gebildet sein, deren Längsränder dampfdicht miteinander verbunden sind.

Dieser Vorschlag macht sich auch die Erkenntnis zunutze, daß es in Sekundär-Wärmeübertragern von Brennwertgeräten wegen des verhältnismäßig geringen Temperaturniveaus nicht notwendig ist, die Lamellen an die wasserführenden Rohre anzulöten. Die rohrförmigen Schutzkörper, vorzugsweise Folien, werden zunächst auf die Rohre aufgebracht bzw. aufgewickelt und im Falle von Folien an den Längsnähten dampfdicht verbunden. Die so vorbereiteten Rohre werden in bekannter Weise in das vorbereitete Lamellenpaket eingesteckt und anschließend mit einem Stempel aufgeweitet. Danach liegen die Rohre, die rohrförmigen Schutzkörper, vorzugsweise Folien, und die Lamellenkragen unter mechanischer Spannung spaltfrei aneinander an, wodurch ein ausreichender Wärmeübergang zwischen ben Lamellen und den Rohren gewährleistet ist. Die rohrförmigen Schutzkörper, vorzugsweise Folien, müssen so beschaffen sein, daß sie die beim Aufweiten in Umfangsrichtung eintretende Dehnung ohne zu reißen mitmachen können.

Um ein Verrutschen der rohrförmigen Schutzkörper bzw. der Folien beim Einstecken der wasserführenden Rohre in das Lamellenpaket zu verbindern, werden die Schutzkörper bzw. Folien vorteilhaft an den in Einsteckrichtung vorne liegenden Stirnenden der Rohre durch Schweißpunkte an diese angebeftet.

Beim Anlöten der wasserseitigen Anschlußteile an die wasserführenden Rohre müssen Folienränder von der direkten Einwirkung der Lötflamme geschützt werden, weil sie sonst wegen ihrer geringen Wärmekapazität angeschmolzen werden. Dadurch würden undefinierbare Kanten zwischen den Rohren und den Folien entstehen, die nur schwer gegen eindringendes Kondensat zu dichten wären.

2

Um diese Probleme zu vermeiden, werden erfindungsgemäß vor dem Aufweiten der Rohre über die Seitenwandbereiche der Folien Manschetten geschoben, die beim Aufweiten der Rohre die Folien straff zwischen sich und den Rohren einklemmen. Beim Anlöten der wasserseitigen Anschlußteile wirken die Manschetten als Wärmepuffer und schützen so die Folien.

Die wasserseitigen Anschlußteile und Manschetten sind, wenn sie aus Kupfer bestehen, nicht beständig gegen das aus den Verbrennungsgasen ausfallende saure Kondensat. Daher wird weiter vorgeschlagen, daß diese Teile mit einer gegen das kondensat beständigen Schutzschicht, z.B. einer Lackschicht, überzogen werden.

Zeichnung

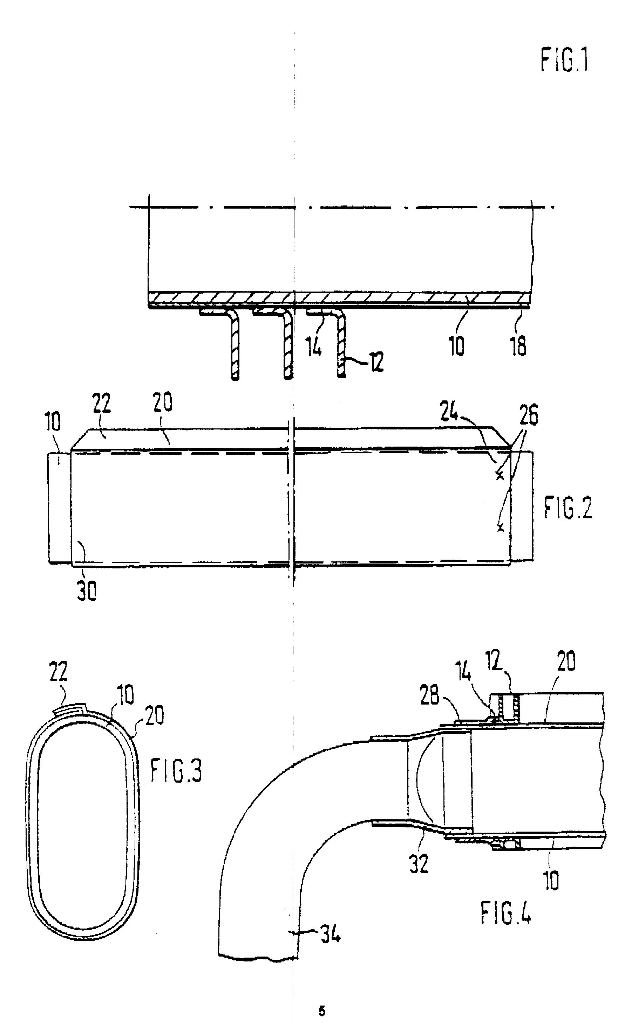

Drei Ausführungsbeispiele der Erfindung sind in der Zeichnung dargestellt und in der nachfolgenden Beschreibung erläutert. Die Figur 1 zeigt in ihrer oberen Hälfte einen Teilschnitt durch das erste Ausführungsbeispiel und im der unteren Hälfte einen Teilschnitt durch das zweite Ausführungsbeispiel. In Figur 2 ist ein zum Einbau in den Lamellenblock vorbereitetes Rohr gemäß dem dritten Ausführungsbeispiel in Seitenansicht dargestellt. Die Figur 3 zeigt vergrößert eine Stirnansicht des Rohres nach Figur 2 nach einem weiteren Arbeitgang und in Figur 4 ist ein Teilschnitt durch das fertiggestellte dritte Ausführungsbeispiel dargestellt.

Beschreibung der Ausführungsbeispiele

Bei allen drei Ausführungsbeispielen sind wasserführende Rohre 10 aus Kupfer mit Lamellen 12 aus Edelstahl bestückt. Die Lamellen 12 sind an den Durchzügen mit Kragen 14 versehen, welche die Rohre 10 umschließen. Der Festsitz der Lamellen 12 auf den Rohren 10 ist durch Aufweiten der Rohre 10 nach dem Aufbringen der Lamellen 12 hergestellt.

Beim ersten Ausführungsbeispiel sind die von den Kragen 14 der Lamellen 12 nicht bedeckten Oberflächenabschnitte der Rohre 10 mit Harz- bzw. Lackschichten 16 abgedeckt, welche gegen das aus den Verbrennungsgasen ausfallende Kondensat beständig sind und die Rohre 10 vor Korrosion schützen. Das Material der Schichten 16 wird zunächst in flüssigem bis breiigem Zustand in die Lamellenspalte eingebracht, wonach es in den Spalten fest oder elastomer wird. Eine besonders günstige Spaltfüllung wird erreicht, wenn der Wärmeübertrager nach dem Einbringen des Materials der Schichten 16 zum Trocknen so aufgestellt wird, daß die Kragen 14 der Lamellen 12 nach unten weisen.

Beim zweiten Ausführungsbeispiel ist jedes wasserführende Rohr 10 durchgehend mit einer galvanischen Schutzschicht 18 überzogen, die vor dem Aufstecken der Lamellen 12 aufgebracht ist. Die Schutzschicht 18 muß so duktil sein, daß die Aufweitung des Rohres 10 ohne Rißbildung mitgemacht wird. Als Material für die Schutzschicht 18 hat sich Sulfamat-Nickel mit ca. 15 bis 30 μm Ni bewährt, auf welche noch eine Chromschicht von 0,5 μm Dicke galvanisch aufgetragen wurde.

Beim dritten Ausführungsbeispiel sind die wasserführenden Rohre 10 je mit einer Folie 20 aus Edelstahl umhüllt, deren Längsränder 22 vorzugsweise durch Rollnahtschweißen dampfdicht miteinander verbunden sind. Als Folienmaterial hat sich Edelstahl 18/8 mit einer Dicke von 10 bis 100 μm, vorzugsweise 40 bis 60 μm bewährt. Die Abdichtung der Längsränder 22 könnte gegebenenfalls auch durch Klebstoff, Lack oder besondere Dichtungselemente erfolgen.

Nach dem dampfdichten Verbinden werden die Längsränder 22 der Folie 20 wie in Figur 3 dargestellt umgelegt, wonach der einsteckseitige Seitenrandbereich 24 der Folie 20 durch einzelne Schweißpunkte 26 am Rohr 10 festgelegt wird. Ein Schweißpunkt 26 liegt auf den Längsrändern 22 und hält diese in der umgelegten Stellung fest. Danach werden die Rohre 10 in das vorbereitete Lamellenpaket eingesteckt und auf jedes Stirnende der Rohre 10 eine Manschette 28 aufgeschoben, welche den benachbarten Seitenrandbereich 24 bzw. 30 der Folie 20 überdeckt. Danach werden die Lamellen 10 und die Manschetten 28 durch Aufweiten der Rohre an diesen festgelegt. Die Folien 20 müssen so duktil sein, daß sie die Dehnung beim Aufweiten der Rohre 10 umbeschadert mitmachen können.

In die wasserführenden Rohre 10 sind Anschlußstücke 32 (Figur 4) eingelötet, die mit weiterführenden Krümmern 34 verbunden sind. Die Manschetten 28, die an den äußeren Enden vorzugsweise mit den Rohren 10 verlötet werden können, verbindern, daß beim Anlöten der Anschlußstücke 28 die Seitenwandbereiche 24, 30 der Folien 20 durch die Lötflamme angeschmolzen werden. Die Anschlußstücke 32 und die Manschetten 28 sind außen mit einer gegen das Kondensat beständigen Schutzschicht überzogen.

Die Anordnung gemäß dem dritten Ausführungsbeispiel gewährleistet einen besonders wirksamen Schutz der nicht korrosionsbeständigen Oberfläche der wasserführenden Rohre gegen die Angriffe der Säurebildner in dem aus den Verbrennungsgasen ausfallenden Kondensat. Anstelle einer Folie als Schtuzschicht könnte auch ein eigensteifes dünnwandiges Rohr entsprechender Stärke zum Schutz eines wasserführenden Rohres verwendet werden, welches zum Befestigen der Lamellen gemeinsam mit dem wasserführenden Rohr aufgeweitet wird.

## Patentansprüche

1. Wärmeübertrager, insbesondere für gas- oder ölbeheizte Wassererhitzer, mit wasserführenden Rohren aus gegenüber Wasser korrosionsfestem Material und mit am Umfang der Rohre befestigten Lamellen aus Edelstahl, die zwischen sich Spalte zum Durchtritt von Verbrennungsgasen aufweisen, dadurch gekennzeichnet, daß die wasserführenden Rohre (10) im Lamellenbereich mit einer vor dem Aufstecken der Lamellen (12) aufgebrachten Schutzschicht (18, 20) durchgehend spaltfrei übersogen sind, welche gegen die im Kondensat der Verbrennungsgase enthaltenen Säurebildner ($NO_x$, $SO_2$, $CO_2$) beständig ist.

2. Wärmeübertrager nach Anspruch 1, dadurch gekennzeichnet, daß die Schutzschicht eine Lack- bzw. Harzschicht (16) ist.

3. Wärmeübertrager nach Anspruch 1, dadurch gekennzeichnet, daß die Schutzschicht eine galvanische Schicht (18) ist, vorzugsweise eine Sulfamat-Nickel-Schicht.

4. Wärmeübertrager nach Anspruch 1, dadurch gekennzeichnet, daß die Schutzschicht durch einen rohrförmigen Körper (20) aus Edelstahl gebildet ist.

5. Wärmeübertrager nach Anspruch 4, dadurch gekennzeichnet, daß der rohrförmige Körper (20) durch eine um das Rohr gelegte Edelstahlfolie gebildet ist, deren Längsränder (22) dampfdicht miteinander verbunden sind.

6. Wärmeübertrager nach Anspruch 5, dadurch gekennzeichnet, daß die Edelstahlfolie (20) an einem Stirnraudbereich durch Schweißpunkte (26) am Rohr (10) angeheftet ist.

7. Wärmeübertrager nach Anspruch 5 oder 6, dadurch gekennzeichnet, daß die Seitenrandbereiche (24, 30) der Edelstahlfolie (20) von Manschetten (28) übergriffen sind, welche auf den wasserführenden Rohren (20) sitzen.

8. Wärmeübertrager nach Anspruch 7, dadurch gekennzeichnet, daß die Manschetten (28) auf die wasserführenden Rohre (10) aufgelötet sind.

9. Wärmeübertrager nach Anspruch 7, dadurch gekennzeichnet, daß die Manschetten (28) mit einer gegen das aus Verbrennungsgasen ausfallende Kondensat beständigen Schutzschicht überzogen sind.

## Claims

1. Heat exchanger, espacially for gas- or oil-fired water heaters, with water-bearing tubes of a material resistant to corrosion by water and with stainless steel fins which are fixed to the circumference of the tubes and have gaps between them to allow combustion gases to pass, characterized in that the water-bearing tubes (10) are coated in the fin region, before the fins (12) are fitted, with a continuous uninterrupted protective layer (18, 20) which is resistant to the acid formers (NOx, $SO_2$, $CO_2$) contained in the condensate from the combustion gases.

2. Heat exchanger according to Claim 1, characterized in that the protective layer is a lacquer or resin layer.

3. Heat exchanger according to Claim 1, characterized in that the protective layer is an electroplated layer (18), preferably a sulphamate nickel layer.

4. Heat exchanger according to Claim 1, characterized in that the protective layer is formed by a tubular body (20) of stainless steel.

5. Heat exchanger according to Claim 4, characterized in that the tubular body (20) is formed by a stainless steel foil which is laid around the tube and the longitudinal edges (22) of which are mutually joined in a vapourtight manner.

6. heat exchanger according to Claim 5, characterized in that the stainless steel foil (20) is tack-welded (26) to the tube (10) in an end edge region.

7. Heat exchanger according to Claim 5 or 6, characterized in that the lateral edge regions (24, 30) of the stainless steel foil (20) are covered by sleeves (28) which are seated on the water-bearing tubes (20-sic).

8. Heat exchanger according to Claim 7, characterized in that the sleeves (28) are soldered to the water-bearing tubes (10).

9. Heat exchanger according to Claim 7, characterized in that the sleeves (28) are coated with a protective layer which is resistant to the condensate precipitating from the combustion gases.

**Revendications**

1. Dispositif de transfert de chaleur, notamment pour des réchauffeurs d'eau chauffés au gaz ou au mazout, comportant des tubes de passage de l'eau en un matériau résistant à la corrosion par l'eau et comportant des ailettes en acier allié fixées à la périphérie des tubes et qui comportent entre elles des intervalles pour le passage des gaz de combustion, dispositif caractérisé en ce que les tubes (10) de passage de l'eau sont revêtus, sur toute l'étendue de la zone des ailettes, d'une couche de protection (18, 20) ininterrompue, déposée avant l'enfilage des ailettes, et qui résiste aux formateurs d'acide ($NO_x$, $SO_2$, $CO_2$) contenus dans le condensat des gaz de combustion.

2. Dispositif de transfert de la chaleur selon la revendication 1, caractérisé en ce que la couche de protection est une couche de laque ou de résine.

3. Dispositif de transfert de la chaleur selon la revendication 1, caractérisé en ce que la couche de protection est une couche galvanique (8), de préférence une couche de sulfamate-nickel.

4. Dispositif de transfert de la chaleur selon la revendication 1, caractérisé en ce que la couche de protection est formée par un corps tubulaire (20) en acier allié.

5. Dispositif de transfert de la chaleur selon la revendication 4, caractérisé en ce que le corps tubulaire (20) est formé par une feuille d'acier allié que l'on place autour du tube et dont les bords longitudinaux (22) sont réunis l'un à l'autre avec étanchéité à la vapeur.

6. Dispositif de transfert de la chaleur selon la revendication 5, caractérisé en ce que la feuille d'acier allié (20) est fixée à une zone de bordure frontale par des points de soudure (26) sur le tube (10).

7. Dispositif de transfert de la chaleur selon la revendication 5 ou 6, caractérisé en ce que les zones de bordure latérale (24, 30) de la feuille d'acier allié (20) sont recouvertes par des manchettes (28) qui reposent sur les tubes de passage de l'eau (20).

8. Dispositif de transfert de la chaleur selon la revendication 7, caractérisé en ce que les manchettes (28) sont brasées sur les tubes de passage de l'eau (10).

9. Dispositif de transfert de la chaleur selon la revendication 7, caractérisé en ce que les manchettes (28) sont revêtues d'une couche de protection résistante à l'égard du condensat qui se dépose à partir des gaz de combustion.

FIG.1

FIG.2

FIG.3

FIG.4